# EUROPÄISCHE PATENTANMELDUNG

(11) **EP 2 113 575 A1**
(43) Veröffentlichungstag der Anmeldung: **04.11.2009**
(21) Anmeldenummer: 08103792.1
(22) Anmeldetag: 30.04.2008
(51) Int. Cl.: C22B 3/24, C22B 3/42, C22B 34/34, C02F 1/28, C02F 1/42, B01J 20/12, B01J 39/08, C01G 39/00, C01G 41/00, D21C 9/16

(54) **Verfahren zur Rückgewinnung von Molybdat oder Wolframat aus wässrigen Lösungen**

(71) Anmelder: Evonik Degussa GmbH, 45128 Essen (DE)
(72) Erfinder: Dietz, Thomas, 63808 Haibach (DE); Süss, Hans Ulrich, 63594 Hasselroth (DE)

(57) **Zusammenfassung**

Verfahren zur Rückgewinnung von Molybdat oder Wolframat aus einer wässrigen Lösung, in dem Molybdat oder Wolframat aus der wässrigen Lösung bei einem ph-Wert im Bereich zwischen 2 und 6 an einem wasserunlöslichen, kationisierten anorganischen Trägermaterial gebunden wird, das beladene Trägermaterial abgetrennt wird und das gebundene Molybdat bzw. Wolframat bei einem ph-Wert im Bereich zwischen 6 und 14 wieder in wässrige Lösung freigesetzt wird.
Das katonisierte anorganische Trägermaterial ist vorzugsweise ein katonisiertes Schichtsilikat, insbesondere ein mit einem quaternären Ammoniumsalz ionenausgetauschter Bentonit.
Das Verfahren eignet sich zur Rückgewinnung von Molybdat oder Wolframat bei der mit Molybdat oder Wolframat katalysierten Delignifizierung von Zellstoff mit Wasserstoffperoxid. Das zurückgewonnene Molybdat oder Wolframat kann in die Delignifizierung zurückgeführt werden.

## Beschreibung

Die Erfindung betrifft ein Verfahren zur Rückgewinnung von Molybdat oder Wolframat aus wässrigen Lösungen, das sich insbesondere zur Rückgewinnung von Molybdat oder Wolframat bei der mit Molybdat oder Wolframat katalysierten Delignifizierung von Zellstoff mit Wasserstoffperoxid eignet.

Üblicherweise wird die Zellstoffbleiche mit Wasserstoffperoxid im Alkalischen durchgeführt, da im Sauren bei erhöhter Temperatur Radikale gebildet werden, die zu unerwünschten Nebenreaktionen, wie dem Abbau von Zellulose, führen. Unter Verwendung eines geeigneten Katalysators ist jedoch eine Delignifizierung und Bleiche mit Wasserstoffperoxid auch unter sauren Bedingungen möglich.

US 4,427,490 beschreibt die Delignifizierung und Bleiche von Kraftzellstoff mit Wasserstoffperoxid im Sauren, katalysiert durch Natriumwolframat oder Natriummolybdat.

V. Kubelka beschreibt im Journal of Pulp and Paper Science, Vol. 18, 1992, Seiten J108-J114 einen Prozess zur Delignifizierung von Zellstoff mit Stufen zur Delignifizierung mit Sauerstoff und einer dazwischen durchgeführten Delignifizierung mit Wasserstoffperoxid, die bei einem pH-Wert von 5 und mit Natriummolybdat als Katalysator durchgeführt wird. In dem Artikel wird vorgeschlagen, Molybdat in bekannter Weise mit Hilfe von Anionenaustauschern zurückzugewinnen.

JP 11 130 762 beschreibt die Rückgewinnung von Wolframat aus einer Reaktionsmischung der mit Wolframat katalysierten Oxidation von Maleinsäureanhydrid mit wässrigem Wasserstoffperoxid. Die Reaktionsmischung wird dazu über ein Chelatierungsharz mit Glucamin-Substituenten geleitet und das Harz wird anschließend mit wässriger Schwefelsäure gewaschen. Danach wird das Wolframat mit wässriger Natronlauge aus dem Chelatierungsharz ausgewaschen.
FR 2 320 946 beschreibt für das gleiche Reaktionsgemisch die Rückgewinnung von Wolframat mit einem stark basischen Anionenaustauscherharz.

JP 2003048716 beschreibt eine Rückgewinnung von Molybdat unter Verwendung eines chelatisierenden Ionenaustauscherharzes.

CZ 279 703 beschreibt einen mehrstufigen Rückgewinnungsprozess für Molybdat, bei dem zunächst Molybdat an einem schwach basischen Styrol-Divinylbenzol-Ionenaustauscher adsorbiert und in einem nächsten Schritt das Molybdat mit wässrigem Ammoniak freigesetzt wird.

In JP 06010089 B wird zur Rückgewinnung von Molybdat ein Chelatierungsharz vorgeschlagen, das Dithiocarboxylgruppen enthält.

Die Rückgewinnung von Molybdat oder Wolframat mit Ionenaustauschersäulen ist für eine Anwendung in der Zellstoffbleiche jedoch wegen der erforderlichen Schritte zum Spülen der Ionenaustauscher zu aufwendig und unwirtschaftlich. Außerdem werden die bei der Delignifizierung von Zellstoff entstehenden Abbauprodukte des Lignins an den im Stand der Technik verwendeten Ionenaustauscherharzen adsorbiert, was sich nachteilig auf die ionenaustauschenden Eigenschaften des Ionenaustauscherharzes auswirkt.

R. C. Francis et al. schlagen im Tagungsband der 93igsten Jahrestagung der PATPTAC 2007, Seiten A261 - A268 vor, bei der katalysierten Delignifizierung von Zellstoff den Molybdat-Katalysator durch Zusatz des kationischen Tensids Cetyltrimethylammoniumbromid zu fällen und den gebildeten Komplex zu filtrieren. Das Molybdat wird aus dem abfiltrierten Komplex durch Auflösen in Natronlauge und Extraktion des kationischen Tensids mit einem Lösungsmittel wie z. B. Isobutanol zurückgewonnen. Das vorgeschlagene Verfahren hat allerdings den Nachteil, dass sich der aus Molybdat mit Cetyltrimethylammoniumbromid gebildete Komplex nur schlecht filtrieren lässt und dass zur Rückgewinnung von Molybdat der Einsatz eines zusätzlichen organischen Lösungsmittels erforderlich ist.

Es besteht deshalb weiterhin ein Bedarf an einem einfach durchzuführenden Verfahren, mit dem sich Molybdat oder Wolframat aus einer wässrigen Lösung zu einem hohen Grad zurückgewinnen lassen, wobei das Verfahren zur Rückgewinnung von Molybdat oder Wolframat aus den bei der Delignifizierung von Zellstoff anfallenden wässrigen Lösungen geeignet ist.

Es wurde nun überraschend gefunden, dass sich diese Aufgabe durch die Verwendung eines wasserunlöslichen, kationisierten anorganischen Trägermaterials lösen lässt. Das erfindungsgemäße Trägermaterial bindet Molybdat oder Wolframat aus wässrigen Lösungen bei einem pH-Wert im Bereich zwischen 2 und 6 und setzt das gebundene Molybdat bzw. Wolframat bei einem pH-Wert im Bereich zwischen 6 und 14 wieder in wässrige Lösung frei. Das erfindungsgemäße Trägermaterial lässt sich außerdem in beiden pH-Bereichen einfach durch Sedimentieren, Filtrieren oder Zentrifugieren von der wässrigen Lösung abtrennen.

Gegenstand der Erfindung ist deshalb ein Verfahren zur Rückgewinnung von Molybdat oder Wolframat aus einer wässrigen Lösung, das folgende Schritte umfasst:
a) In Kontakt bringen einer Molybdat oder Wolframat enthaltenden wässrigen Lösung mit einem wasserunlöslichen, kationisierten anorganischen Trägermaterial bei einem pH-Wert im Bereich zwischen 2 und 6 unter Erhalt eines mit Molybdat oder Wolframat beladenen Trägermaterials und einer an Molybdat oder Wolframat abgereicherten wässrigen Lösung,
b) Abtrennen des mit Molybdat oder Wolframat beladenen Trägermaterials von der an Molybdat oder Wolframat abgereicherten wässrigen Lösung,
c) in Kontakt bringen des mit Molybdat oder Wolframat beladenen Trägermaterials mit einer wässrigen Lösung bei einem pH-Wert im Bereich zwischen 6 und 14 unter Erhalt eines an Molybdat oder Wolframat abgereicherten Trägermaterials und einer mit Molybdat oder Wolframat beladenen wässrigen Lösung, und
d) Abtrennen des an Molybdat oder Wolframat abgereicherten Trägermaterials von der mit Molybdat oder Wolframat beladenen wässrigen Lösung.

Bei dem erfindungsgemäßen Verfahren erfolgt in Schritt a) das in Kontakt bringen der Molybdat oder Wolframat enthaltenden wässrigen Lösung mit dem wasserunlöslichen, kationisierten anorganischen Trägermaterial bei einem pH-Wert im Bereich zwischen 2 und 6, vorzugsweise im Bereich von 3 bis 5, besonders bevorzugt im Bereich von 3,5 bis 4. Die Einstellung eines pH-Werts in diesen Bereichen ermöglicht eine fast vollständige Rückgewinnung von Molybdat oder Wolframat aus der wässrigen Lösung bei einem geringen Verbrauch an den pH-Wert regulierenden Mitteln. Bei dem in Kontakt bringen wird das wasserunlösliche, kationisierte anorganische Trägermaterial vorzugsweise mit einem Rührer oder einem Dispergator in der Molybdat oder Wolframat enthaltenden wässrigen Lösung verteilt. Das in Kontakt bringen kann bei einer beliebigen Temperatur erfolgen, geeignet sind Temperaturen im Bereich von 0 bis 100 °C.

Das kationisierte anorganische Trägermaterial wird in Schritt a) beim in Kontakt bringen mit der Molybdat oder Wolframat enthaltenden wässrigen Lösung vorzugsweise in einer Menge von 10 bis 1000 Gewichtsteilen Trägermaterial je Gewichtsteil Molybdän oder in einer Menge von 200 bis 10000 Gewichtsteilen Trägermaterial je Gewichtsteil Wolfram eingesetzt. Zur Rückgewinnung von Molybdat werden besonders bevorzugt 50 bis 500 und insbesondere 100 bis 300 Gewichtsteile Trägermaterial je Gewichtsteil Molybdän eingesetzt. Zur Rückgewinnung von Wolframat werden besonders bevorzugt 1000 bis 5000 und insbesondere 2000 bis 3000 Gewichtsteile Trägermaterial je Gewichtsteil Molybdän eingesetzt.

In Schritt b) des erfindungsgemäßen Vefahrens wird das mit Molybdat oder Wolframat beladene Trägermaterial von der an Molybdat oder Wolframat abgereicherten wässrigen Lösung abgetrennt. Das Abtrennen kann mit allen dem Fachmann bekannten Fest-Flüssig-Trennverfahren erfolgen, beispielsweise durch Sedimentieren, Filtrieren oder Zentrifugieren. Das abgetrennte, mit Molybdat oder Wolframat beladenen Trägermaterial kann zusätzlich mit Wasser mit einem pH-Wert zwischen 2 und 6 gewaschen werden, um den Anteil an daran haftenden organischen Verunreinigungen zu verringern.

In Schritt c) des erfindungsgemäßen Vefahrens wird das in Schritt b) abgetrennte, mit Molybdat oder Wolframat beladene Trägermaterial mit einer wässrigen Lösung bei einem pH-Wert im Bereich zwischen 6 und 14 in Kontakt gebracht. In diesem pH-Bereich wird Molybdat oder Wolframat vom Träger wieder abgelöst und es wird ein an Molybdat oder Wolframat abgereichertes Trägermaterial und eine mit Molybdat oder Wolframat beladene wässrige Lösung erhalten. Der pH-Wert wird dabei vorzugsweise im Bereich von 8 bis 12 und besonders bevorzugt im Bereich von 9 bis 11 gewählt. Die Einstellung eines pH-Werts in diesen Bereichen ermöglicht eine fast vollständige Ablösung von Molybdat oder Wolframat von dem Träger bei einem geringen Verbrauch an den pH-Wert regulierenden Mitteln. Bei dem in Kontakt bringen wird das mit Molybdat oder Wolframat beladene Trägermaterial vorzugsweise mit einem Rührer oder einem Dispergator in der wässrigen Lösung verteilt. Das in Kontakt bringen kann bei einer beliebigen Temperatur erfolgen, geeignet sind Temperaturen im Bereich von 0 bis 100 °C.

In Schritt d) des erfindungsgemäßen Vefahrens wird das an Molybdat oder Wolframat abgereicherte Trägermaterial von der mit Molybdat oder Wolframat beladenen wässrigen Lösung abgetrennt. Das Abtrennen kann mit allen dem Fachmann bekannten Fest-Flüssig-Trennverfahren erfolgen, beispielsweise durch Sedimentieren, Filtrieren oder Zentrifugieren. Das abgetrennte, an Molybdat oder Wolframat abgereicherte Trägermaterial kann zusätzlich mit einer wässrigen Lösung mit einem pH-Wert zwischen 6 und 14 gewaschen werden, um die Ablösung von Molybdat oder Wolframat vom Trägermaterial zu vervollständigen. Die beim Waschen resultierende Waschflüssigkeit wird vorzugsweise mit der mit Molybdat oder Wolframat beladenen wässrigen Lösung vereinigt.

Im erfindungsgemäßen Verfahren wird zur Abtrennung ein wasserunlösliches, kationisiertes anorganisches Trägermaterial verwendet. Als kationisiertes anorganisches Trägermaterial eignen sich anorganische Trägermaterialien, deren Oberfläche mit positiv geladenen funktionellen Gruppen modifiziert wurde. Die Modifizierung kann beispielsweise durch Umsetzung der Oberfläche mit Reagenzien erfolgen, die eine positiv geladene funktionelle Gruppe kovalent auf der Oberfläche verankern. Geeignete wasserunlösliche, kationisierte anorganische Trägermaterialien mit kovalent verankerten positiv geladenen funktionellen Gruppen sind beispielsweise mit Aminosilanen modifizierte gefällte oder pyrogene Kieselsäuren, die vorzugsweise zusätzlich an der Aminogruppe quaternisiert sind. Die Modifizierung kann alternativ auch durch Ionenaustausch eines an der Oberfläche negativ geladenen anorganischen Trägermaterials mit einem quaternären Ammoniumsalz erfolgen. Das dazu verwendete quaternäre Ammoniumsalz weist vorzugsweise mindestens einen unpolaren Alkylrest mit 6 bis 24, besonders bevorzugt 12 bis 22 Kohlenstoffatomen auf, um eine Ablösung der quaternären Ammoniumionen vom Träger im Sauren zu verhindern.

Vorzugsweise wird im erfindungsgemäßen Verfahren als wasserunlösliches, kationisiertes anorganisches Trägermaterial ein kationisiertes Schichtsilikat verwendet, besonders bevorzugt ein mit einem quaternären Ammoniumsalz ionenausgetauschtes Schichtsilikat. Als Schichtsililkate eignen sich dabei Kaoline, Smektite, Illite, Bentonite (Montmorillonite), Hektorite, Pyrophillite, Attapulgite, Sepiolite und Laponite, vorzugsweise mit einem quaternisierten Ammoniumsalz ionenausgetauschte Bentonite, Hektorite und Attapulgite, besonders bevorzugt mit einem quaternären Ammoniumsalz ionenausgetauschter Bentonit.

Mit quaternisierten Ammoniumsalzen ionenausgetauschte Bentonite, Hektorite und Attapulgite sind kommerziell erhältlich: Quaternium-18 Bentonit als Bentone 34 von Rheox Corp. und als Claytone 34, Claytone 40 und Claytone XL von Southern Clay; Stearalkonium Bentonit als Tixogel LG von United Catalysts, als Bentone SD-2 von Elementis Specialties und als Claytone AF und Claytone APA von Southern Clay; Quaternium-18/Benzalkonium Bentonit als Claytone GR, Claytone HT und Claytone PS von Southern Clay; Quaternium-18 Hectorite als Bentone 38 von Rheox Corp.; Dihydrogenated Tallow Benzylmonium Hectorite als Bentone SD-3 von Rheox Corp.; Stearalkonium Hectorite als Bentone 27 von Rheox Corp.; sowie kationisierter Attapulgit als Vistrol 1265 von Cimbar. Diese ionenausgetauschten Schichtsilikate können in dem erfindungsgemäßen Verfahren sowohl als Pulver als auch in Form der im Handel erhältlichen Dispersionen in einem Öl oder einem organischen Lösungsmittel eingesetzt werden.

Neben den handelsüblichen, mit Tetraalkylammoniumionen ionenausgetauschten Bentoniten, Hektoriten und Attapulgiten können auch die entsprechenden mit quaternisierten Alkanolaminfettsäureestern ionenausgetauschten Materialien eingesetzt werden, insbesondere mit Dimethyldiethanolammonium-mono- und -difettsäureester, sowie Methyltriethanolammonium-mono-, -di- und -trifettsäureester ionenausgetauschter Bentonit. Vorzugsweise werden dabei entsprechende Ester mit gesättigten Fettsäuren, insbesondere gesättigten Fettsäuren mit 12 bis 18 Kohlenstoffatomen verwendet.

Gegenstand der Erfindung ist außerdem ein Verfahren zur Rückgewinnung von Molybdat oder Wolframat bei der Delignifizierung von Zellstoff, bei dem Zellstoff in einer wässrigen Mischung enthaltend 0,1 bis 5 Gew.-% Wasserstoffperoxid und 10 bis 1000 ppm Molybdän in Form von Molybdat oder 200 bis 10000 ppm Wolfram in Form von Wolframat, jeweils bezogen auf die Masse an trockenem Zellstoff, bei einer Temperatur von 30 bis 100 °C und einem pH-Wert im Bereich von 1 bis 7 umgesetzt und der Zellstoff von der wässrigen Lösung abgetrennt wird, aus der resultierenden wässrigen Lösung mit den oben genannten Schritten Molybdat oder Wolframat zurückgewonnen wird und die im letzten Schritt resultierende, mit Molybdat oder Wolframat beladene wässrige Lösung in die Delignifizierung von Zellstoff mit Wasserstoffperoxid zurückgeführt wird.

Bei der Delignifizierung von Zellstoff unter Zusatz von Molybdat oder Wolframat als Katalysator werden 0,1 bis 5 Gew.-%, vorzugsweise 0,5 bis 4 Gew.-% und besonders bevorzugt 1 bis 3 Gew.-% Wasserstoffperoxid, bezogen auf die Masse an trockenem Zellstoff, eingesetzt. Bei Verwendung von Molybdat als Katalysator wird das Molybdat in einer Menge von 10 bis 1000 ppm, vorzugsweise 100 bis 700 ppm und besonders bevorzugt 200 bis 600 ppm Molybdän, bezogen auf die Masse an trockenem Zellstoff, eingesetzt. Bei Verwendung von Wolframat als Katalysator wird das Wolframat in einer Menge von 200 bis 10000 ppm, vorzugsweise 500 bis 5000 ppm und besonders bevorzugt 1500 bis 3000 ppm Wolfram, bezogen auf die Masse an trockenem Zellstoff, eingesetzt. Durch die Wahl der Mengen an Wasserstoffperoxid und Molybdat oder Wolframat in diesen Bereichen wird eine wirksame Delignifizierung und Bleiche des Zellstoffs erzielt und ein Zellstoff mit verringerter Vergilbungsneigung erhalten.

Die Delignifizierung von Zellstoff unter Zusatz von Molybdat oder Wolframat als Katalysator wird bei einer Temperatur von 30 bis 100 °C, vorzugsweise 60 bis 95 °C und besonders bevorzugt 75 bis 95 °C durchgeführt, wobei der pH-Wert im Bereich von 1 bis 7, bevorzugt 2 bis 6 und besonders bevorzugt 2,5 bis 5,5 gewählt wird. Die Wahl der Reaktionsbedingungen bewirkt eine rasche und wirksame Delignifizierung und Bleiche des Zellstoffs. Außerdem lässt sich die Delignifizierung unter Zusatz von Molybdat oder Wolframat bei diesen Reaktionsbedingungen mit nur geringem zusätzlichen Bedarf an Energie und/oder Chemikalien zur Einstellung von Temperatur und/oder pH-Wert mit weiteren Verfahrensstufen zur Delignifizierung und/oder Bleiche kombinieren.

Die nachfolgenden Beispiele illustrieren das beanspruchte Verfahren, ohne jedoch den Gegenstand der Erfindung zu beschränken.

### Beispiele:

### Beispiel 1 (Vergleichsbeispiel)

Delignifizierung von Zellstoff mit Wasserstoffperoxid ohne Molybdatzusatz

761 g Eukalyptuszellstoff, entsprechend 200 g absolut trockenem Zellstoff, mit einer Kappazahl von 10,3, einem Weißgehalt von 57,0 % ISO und einem Gelbwert von 22,1 wurden mit Wasser und 1,0 Gew.-% Wasserstoffperoxid (bezogen auf absolut trockenen Zellstoff) auf eine Stoffdichte von 10 Gew.-% gebracht und der pH-Wert wurde mit Schwefelsäure auf pH 2,7 eingestellt. Die Mischung wurde in einem Plastikbeutel im Wasserbad 120 min auf 90 °C erhitzt. Danach wurde Wasser zugegeben, so dass eine Suspension mit 2 Gew.-% Stoffdichte erhalten wurde, und der Zellstoff über eine Filternutsche mit Filterpapier abfiltriert. Der behandelte Zellstoff hatte eine Kappazahl von 5,4, einen Weißgehalt von 60,2 % ISO und einen Gelbwert von 22,6. Das erhaltene Filtrat hatte einen pH-Wert von 3,0. Aus dem Restperoxidgehalt des Filtrats ergab sich ein Umsatz an Wasserstoffperoxid von 59 %.

### Beispiel 2

Delignifizierung von Zellstoff mit Wasserstoffperoxid und Molybdatrückgewinnung

Beispiel 1 wurde wiederholt, der Mischung aus Zellstoff, Wasser und Wasserstoffperoxid wurde vor dem Erhitzen jedoch zusätzlich Natriummolybdat in einer Menge von 500 ppm Molybdän bezogen auf absolut trockenen Zellstoff zugesetzt. Der behandelte Zellstoff hatte eine Kappazahl von 3,5, einen Weißgehalt von 61,5 % ISO und einen Gelbwert von 19,8. Das erhaltene Filtrat hatte einen pH-Wert von 3,0. Aus dem Restperoxidgehalt des Filtrats ergab sich ein Umsatz an Wasserstoffperoxid von 79 %. Das Filtrat enthielt 9,8 ppm Molybdän, was 98 % der eingesetzten Menge entsprach.

Der pH-Wert des Filtrats wurde mit 10 Gew.-% Natronlauge auf pH 3,7 eingestellt. Danach wurden 0,2 Gew.-% (bezogen auf das Gewicht des Filtrats) kationisch modifizierter Bentonit BENTONE SD-2 (Elementis Specialties) zugegeben und mit einem Dispergierrührer mit Lochscheibe (Pendraulik Modell LD50) bei einer Drehzahl von ca. 1000 min⁻¹ für 15 min dispergiert. Der pH-Wert wurde nochmals mit 10 Gew.-% Natronlauge auf pH 3,7 eingestellt und die Dispersion über eine Filternutsche mit Filterpapier abfiltriert. Der Molybdän-Gehalt im Filtrat betrug 0,46 ppm, was einer Abtrennung von Molybdän durch den Bentonit von 95 % entspricht.

Der Bentonit-Filterkuchen wurde trockengesaugt und in Wasser, dessen pH-Wert mit 10 Gew.-% Natronlauge auf pH 10 eingestellt wurde, bei einer Feststoffdichte von 5 % mit einem Magnetrührer 30 min bei 50 °C gerührt. Der pH-Wert wurde nochmals mit 10 Gew.-% Natronlauge auf pH 10 eingestellt, die Mischung wurde über eine Filternutsche mit Filterpapier abfiltriert und der Filterkuchen zweimal mit jeweils 20 % des Filtratvolumens an mit Natronlauge auf pH 10 eingestelltem 50 °C warmem Wasser gewaschen. Das dabei erhaltene Filtrat enthielt 91 % der zur Behandlung des Zellstoffs eingesetzten Menge an Molybdat.

### Beispiel 3

Delignifizierung von Zellstoff unter Verwendung von zurückgewonnenem Molybdat

Beispiel 2 wurde mit einer Menge von 228 g Eukalyptuszellstoff, entsprechend 60 g absolut trockener Stoff, wiederholt. Zur Herstellung der Mischung aus Zellstoff, Wasser, Wasserstoffperoxid und Molybdat wurde jedoch an Stelle von Natriummolybdat das am Ende von Beispiel 2 erhaltene Filtrat eingesetzt. An Stelle von frischem Bentonit BENTONE SD-2 wurde die entsprechende Menge des am Ende von Beispiel 2 erhaltenen Bentonit-Filterkuchens verwendet.

Der behandelte Zellstoff hatte eine Kappazahl von 2,9, einen Weißgehalt von 62,2 % ISO und einen Gelbwert von 19,1. Das nach der Behandlung des Zellstoffs erhaltene Filtrat hatte einen pH-Wert von 3,0. Aus dem Restperoxidgehalt des Filtrats ergab sich ein Umsatz an Wasserstoffperoxid von 81 %. Das Filtrat enthielt 9,8 ppm Molybdän, was 98 % der eingesetzten Menge entsprach. Nach der Behandlung des Filtrats mit dem Bentonit bei pH 3,7 betrug der Molybdän-Gehalt im Filtrat 0,54 ppm, was einer Abtrennung von Molybdän durch den Bentonit von 94 % entspricht. Das bei der nachfolgenden Behandlung des Bentonits mit Wasser von pH 10 erhaltene Filtrat enthielt 90 % der zur Behandlung des Zellstoffs eingesetzten Menge an Molybdat.

### Beispiel 4

Rückgewinnung von Molybdat mit unterschiedlichen Schichtsilikaten

Wässrige Lösungen von Natriummolybdat mit einem Gehalt an 30 ppm Molybdän, die mit Schwefelsäure auf pH 3,7 eingestellt wurden, wurden mit jeweils 0,2 Gew.-% (bezogen auf das Gewicht der Lösung) Schichtsilikat versetzt und mit einem Dispergierrührer mit Lochscheibe (Pendraulik Modell LD50) bei einer Drehzahl von ca. 1000 min⁻¹ für 15 min dispergiert. Der pH-Wert wurde nochmals mit 10 Gew.-% Natronlauge auf pH 3,7 eingestellt und die Dispersion über eine Filternutsche mit Filterpapier abfiltriert. Im Fall des Schichtsilikats Syntal 696 musste der pH-Wert durch Zugabe von Schwefelsäure eingestellt werden. Tabelle 1 zeigt die untersuchten Schichtsilikate, den Gehalt an Molybdän im Filtrat und die Filtrierbarkeit des mit Molybdat beladenen Schichtsilikats.

**Tabelle 1**

| Rückgewinnung von Molybdat mit unterschiedlichen Schichtsilikaten | | |
|---|---|---|
| Schichtsilikat | Molybdän-Gehalt im Filtrat in ppm | Filtrierbarkeit |
| Bentone SD-2 (kationisierter Bentonit, Elementis Specialties) | kleiner 1 | leicht filtrierbar |
| EX M 1694 (säureaktivierter Ca-Bentonit, Süd-Chemie) | 24 | leicht filtrierbar |
| Bentone HC (gereinigter Hectorit, Elementis Specialties) | nicht bestimmt | nicht filtrierbar |
| Syntal 696 (Basisches Mg-Al-Carbonat, Süd-Chemie) | 5,6 | schwer filtrierbar |

## Patentansprüche

1. Verfahren zur Rückgewinnung von Molybdat oder Wolframat aus einer wässrigen Lösung umfassend die Schritte
a) in Kontakt bringen einer Molybdat oder Wolframat enthaltenden wässrigen Lösung mit einem wasserunlöslichen, kationisierten anorganischen Trägermaterial bei einem pH-Wert im Bereich zwischen 2 und 6 unter Erhalt eines mit Molybdat oder Wolframat beladenen Trägermaterials und einer an Molybdat oder Wolframat abgereicherten wässrigen Lösung,
b) Abtrennen des mit Molybdat oder Wolframat beladenen Trägermaterials von der an Molybdat oder Wolframat abgereicherten wässrigen Lösung,
c) in Kontakt bringen des mit Molybdat oder Wolframat beladenen Trägermaterials mit einer wässrigen Lösung bei einem pH-Wert im Bereich zwischen 6 und 14 unter Erhalt eines an Molybdat oder Wolframat abgereicherten Trägermaterials und einer mit Molybdat oder Wolframat beladenen wässrigen Lösung, und
d) Abtrennen des an Molybdat oder Wolframat abgereicherten Trägermaterials von der mit Molybdat oder Wolframat beladenen wässrigen Lösung.

2. Verfahren nach Anspruch 1,
**dadurch gekennzeichnet,**
**dass** in Schritt a) der pH-Wert im Bereich von 3 bis 5 und vorzugsweise im Bereich von 3,5 bis 4 liegt.

3. Verfahren nach Anspruch 1 oder 2,
**dadurch gekennzeichnet,**
**dass** in Schritt c) der pH-Wert im Bereich von 8 bis 12 und vorzugsweise im Bereich von 9 bis 11 liegt.

4. Verfahren nach einem der vorangehenden Ansprüche,
**dadurch gekennzeichnet,**
**dass** das kationisierte anorganische Trägermaterial ein kationisiertes Schichtsilikat ist.

5. Verfahren nach Anspruch 4,
**dadurch gekennzeichnet,**
**dass** das kationisierte Schichtsilikat ein mit einem quaternären Ammoniumsalz ionenausgetauschter Bentonit ist.

6. Verfahren nach einem der vorangehenden Ansprüche,
**dadurch gekennzeichnet,**
**dass** das kationisierte anorganische Trägermaterial beim in Kontakt bringen mit einer Molybdat oder Wolframat enthaltenden wässrigen Lösung in einer Menge von 10 bis 1000 Gewichtsteilen Trägermaterial je Gewichtsteil Molybdän oder in einer Menge von 200 bis 10000 Gewichtsteilen Trägermaterial je Gewichtsteil Wolfram eingesetzt wird.

7. Verfahren nach Anspruch 6,
**dadurch gekennzeichnet,**
**dass** das kationisierte anorganische Trägermaterial in einer Menge von 50 bis 500, vorzugsweise 100 bis 300 Gewichtsteilen Trägermaterial je Gewichtsteil Molybdän eingesetzt wird.

8. Verfahren nach Anspruch 6,
**dadurch gekennzeichnet,**
**dass** das kationisierte anorganische Trägermaterial in einer Menge von 1000 bis 5000, vorzugsweise 2000 bis 3000 Gewichtsteilen Trägermaterial je Gewichtsteil Wolfram eingesetzt wird.

9. Verfahren nach einem der vorangehenden Ansprüche,
**dadurch gekennzeichnet,**
**dass** in einem zusätzlichen Schritt Zellstoff in einer wässrigen Mischung enthaltend 0,1 bis 5 Gew.-% Wasserstoffperoxid und 10 bis 1000 ppm Molybdän in Form von Molybdat oder 200 bis 10000 ppm Wolfram in Form von Wolframat, jeweils bezogen auf die Masse an trockenem Zellstoff, bei einer Temperatur von 30 bis 100 °C und einem pH-Wert im Bereich von 1 bis 7 umgesetzt wird, der Zellstoff von der wässrigen Mischung abgetrennt wird, die dabei resultierende wässrige Lösung in Schritt a) mit dem wasserunlöslichen, kationisierten anorganischen Trägermaterial in Kontakt gebracht wird und die in Schritt d) abgetrennte, mit Molybdat oder Wolframat beladene wässrige Lösung in den Schritt der Umsetzung von Zellstoff mit Wasserstoffperoxid zurückgeführt wird.

10. Verfahren nach Anspruch 9,
**dadurch gekennzeichnet,**
**dass** bei der Umsetzung des Zellstoffs die wässrige Mischung 0,5 bis 4 Gew.-%, vorzugsweise 1 bis 3 Gew.-%, Wasserstoffperoxid, bezogen auf die Masse an trockenem Zellstoff, enthält.

11. Verfahren nach Anspruch 9 oder 10,
**dadurch gekennzeichnet,**
**dass** bei der Umsetzung des Zellstoffs die wässrige Mischung 100 bis 700 ppm, vorzugsweise 200 bis 600 ppm, Molybdän, bezogen auf die Masse an trockenem Zellstoff, in Form von Molybdat enthält.

12. Verfahren nach Anspruch 9 oder 10,
**dadurch gekennzeichnet,**
**dass** bei der Umsetzung des Zellstoffs die wässrige Mischung 500 bis 5000 ppm, vorzugsweise 1500 bis 3000 ppm, Wolfram, bezogen auf die Masse an trockenem Zellstoff, in Form von Wolframat enthält.

13. Verfahren nach einem der Ansprüche 9 bis 12,
**dadurch gekennzeichnet,**
**dass** die Umsetzung des Zellstoffs bei einer Temperatur von 60 bis 95 °C, vorzugsweise 75 bis 95 °C, erfolgt.

14. Verfahren nach einem der Ansprüche 9 bis 13,
**dadurch gekennzeichnet,**
**dass** die Umsetzung des Zellstoffs bei einem pH-Wert von 2 bis 6, vorzugsweise 2,5 bis 5,5, erfolgt.
